# EUROPÄISCHE PATENTSCHRIFT

(11) **EP 2 799 197 B1**
(45) Veröffentlichungstag und Bekanntmachung des Hinweises auf die Patenterteilung: **20.12.2017**
(21) Anmeldenummer: 14001554.6
(22) Anmeldetag: 02.05.2014
(51) Int. Cl.: B27M 1/08, B27C 9/02, B27B 5/06, B23D 47/04

(54) **Verfahren zum Bearbeiten einer großformatigen Platte**
Method of machining a large panel
Procédé d'usinage de grands panneaux

(30) Priorität: 04.05.2013 DE 102013007556
(43) Veröffentlichungstag der Anmeldung: 05.11.2014
(73) Patentinhaber: IMA Klessmann GmbH Holzbearbeitungssysteme, 32312 Lübbecke (DE)
(72) Erfinder: Schürmann, Ralf, DE - 32351 Stemwede (DE)
(74) Vertreter: Schober, Mirko

(56) Entgegenhaltungen:
- EP-A1- 0 292 635
- EP-A1- 0 539 669
- EP-A1- 1 510 276
- EP-A1- 2 098 343
- EP-A1- 2 732 942
- EP-A2- 1 369 215
- EP-A2- 1 925 410
- EP-A2- 2 147 761
- EP-A2- 2 275 235
- WO-A1-2009/107099
- DE-A1- 3 520 464
- DE-A1- 3 941 551
- DE-A1- 19 637 954
- DE-C1- 4 132 099
- FR-A1- 2 473 374

## Beschreibung

Die Erfindung betrifft ein Verfahren zum Bearbeiten einer großformatigen Platte.

Großformatplatten, die in der Regel aus Holz oder Holzaustauschstoffen gebildet sind, werden durch Zerteilen bzw. Vereinzeln zu kleinen Platten weiter verarbeitet. Dabei wird zunächst ein Zuschnittplan erstellt, in welchem die von einem Bearbeitungsaggregat, insbesondere einem Fräser, auszuführenden Rück- und Trennschnitte abgelegt sind. Üblicherweise werden solche Großformatplatten mittels Portalfräsmaschinen vereinzelt. Dabei wird die Platte eingespannt und durch ein Fräsportal geführt.

Die EP 2 275 235 A2 beschreibt ein Bearbeitungsverfahren, bei dem Spannklammern die großformatigen Platten einseitig halten, während die Platte bearbeitet wird. Nur beim Trennschnittwerden beide zu erwartenden Teilplatten separat gehalten. Nach dieser Trennung wird das verbleibende Halbzeug nur weiterhin von den Spannklammern gehalten, während der abgetrennte Teil zu einer anderen Bearbeitungsstation transportiert wird.

Die DE 196 37 954 A1 offenbart Saugspanner, die in X-Richtung bewegt werden können. Dabei sind sie in Y-Richtung verschieblich, um ausrichtbar zu sein, doch nach der Befestigung sind sie in der Richtung fest. Diese Anordnung hat den Nachteil, dass sie auf der Oberfläche angreifen und somit die Beweglichkeit der Bearbeitungsmaschinen behindern können.

Nachteilig an bestehenden Verfahren ist, dass die Platte für saubere genaue Schnitte mit Spannvorrichtungen am Rand fixiert bzw. über diese geführt werden muss. Die Angriffsbereiche der Spannvorrichtungen begrenzen die Bewegungsfreiheit und die Positionierung des Fräswerkzeugs, so dass die Angriffspunkte der Spannwerkzeuge bei der Vorgabe der Zuschnittpläne berücksichtigt werden müssen. Dabei muss in der Regel in Kauf genommen werden, dass an den Stellen, an denen die Spannvorrichtungen angreifen, Verschnitt entsteht. Beim Erstellen des Zuschnittplans ist dieser Verschnitt nicht zu vermeiden, so dass beim Vereinzeln der Großformatplatte immer noch Verschnitt zurück bleibt.

Aufgabe der vorliegenden Erfindung ist es, ein Verfahren zum Bearbeiten einer großformatigen Platte anzugeben, bei dem die erwähnten Nachteile nicht mehr oder in sehr viel geringerem Maße auftreten.

Gelöst wird diese Aufgabe durch ein Verfahren zum Bearbeiten einer großformatigen Platte mit den Merkmalen des Anspruchs 1. Vorteilhafte Ausführungsformen finden sich in den Unteransprüchen.

Nach dem Bereitstellen einer Großformatplatte - im Folgenden auch kurz "Platte" genannt - wird diese zunächst von der wenigstens einen Greifeinrichtung ergriffen und entsprechend dem vorgegebenen Zuschnittplan entlang ihres Umfangs durch Rückschnitte bearbeitet. Auf diese Weise wird vor der Vereinzelung der Platte bereits der unvermeidliche Verschnitt ringsherum entfernt. Dabei ist eine zweite Greifeinrichtung vorgesehen, die wie auch die wenigstens eine erste Greifeinrichtung in der ersten Richtung und der zweiten Richtung verfahr-bar sein kann. Diese zweite Greifeinrichtung spannt die Platte dann im Bereich eines vom ersten Rand der Platte, an welchem die erste Greifeinrichtung angreift, verschiedenen zweiten Randes der Platte ein. Anschließend wird die Platte vereinzelt. Zusätzlich können auch noch weitere Bearbeitungen an der Schmalseite bzw. an der Ober- oder Unterseite vorgenommen werden.

Bevorzugt ist vorgesehen, dass das Vereinzeln der mit Rückschnitten versehenen großformatigen Platte durch sukzessives Abtrennen jeweils eines Vereinzelungsteils, insbesondere durch Ausführen rechtwinkliger Trennschnitte erfolgt. Rechtwinklig bedeutet hier, dass zwei aneinander angrenzende, im rechten Winkel stehende Trennschnitte durchgeführt werden.

Bei allen Schnitten werden bevorzugt die Greifeinrichtungen und/oder das Bearbeitungswerkzeug in der ersten und/ oder zweiten Richtung relativ zueinander bewegt.

Wenigstens eine Greifeinrichtung, bevorzugt auch beide, weist eine Mehrzahl Greifelemente auf, welche aufeinander zu und voneinander weg verschieblich und einzeln ansteuerbar ausgebildet sind. So können die Greifeinrichtungen kollektiv oder einzeln in der ersten und/oder der zweiten Richtung bewegt werden. So ist es auch möglich, lokal einen Angriff der Greifeinrichtung zu lösen, um an der Stelle einen Schnitt oder eine Bearbeitung durchführen zu können. Auf diese Weise kann der Verschnitt weiter verringert werden, der sonst durch unbewegliche Greifelemente entstehen würde.

Bei der Durchführung der Trennschnitte oder Rückschnitte kann vorgesehen sein, dass die Platte in einer ersten und/oder einer zweiten Vorschubrichtung durch Verschieben der Greifeinrichtungen relativ zum Bearbeitungsaggregat verschoben wird. Dies kann durch einseitiges Verschieben der Platte oder des Bearbeitungsaggregats oder durch gleichzeitiges Verschieben realisiert werden.

Insbesondere kann vorgesehen sein, dass während der Durchführung des Schrittes der Entfernung von Verschnittteilen entlang des Umfangs der Platte, das Bearbeitungsaggregat und die Platte relativ zueinander so bewegt werden, dass das Bearbeitungsaggregat die Platte, insbesondere vollständig, umläuft. So kann entlang der gesamten Umrandung der Platte möglicher Verschnitt schon vor dem Vereinzeln entfernt werden. Weiter kann nach einer besonderen Variante auch vorgesehen sein, dass vor der Vereinzelung der Platte die nach Zuschnittplan vorgegebene Außenkontur der Platte vollständig durch Durchführen von Rückschnitten fertig gestellt wird.

Nach einer bevorzugten Ausführungsform der Erfindung ist vorgesehen, dass wenigstens eines der Greifelemente während der Durchführung der Rückschnitte oder Trennschnitte aus dem Eingriff mit der Platte gelöst und/oder in Eingriff mit der Platte gebracht wird. Hierdurch wird eine "Umgreifbewegung" möglich, die es erlaubt, auch komplizierte Schnittbilder behinderungsfrei abzufahren. Der Verschnitt infolge von nicht zu entfernenden Haltevorrichtungen für die Platte kann so eliminiert werden.

Der erfindungsgemäße Verfahrensablauf wird nachfolgend beispielhaft an den Figuren 1A bis 3B näher erläutert.

Die Abbildungen zeigen eine beispielhafte zeitliche Abfolge des erfindungsgemäßen Verfahrens.
Figur 1A zeigt eine schematische Ansicht nach Zuführung einer Großformatplatte.
Figur 1B zeigt eine schematische Ansicht der Großformatplatte beim Angreifen einer ersten Spanneinrichtung.
Figur 1C zeigt eine schematische Ansicht der Großformatplatte beim Angreifen einer zweiten Spanneinrichtung.
Figur 2A zeigt die Positionierung des Bearbeitungsaggregats zu Beginn des Rückschnitts.
Figur 2B zeigt die Positionierung des Bearbeitungsaggregats nach Beendigung des Rückschnitts einer ersten Schmalseite der Platte.
Figur 2C zeigt die Positionierung des Bearbeitungsaggregats am Beginn des Rückschnitts einer zweiten Schmalseite der Platte.
Figur 2D zeigt die Positionierung des Bearbeitungsaggregats nach Beendigung des Rückschnitts einer ersten Schmalseite der Platte.
Figur 2E und 2F zeigen die Positionierung des Bearbeitungsaggregats an einer dritten Schmalseite.
Figur 2G zeigt die Positionierung des Bearbeitungsaggregats an einer vierten Schmalseite.
Figur 2H zeigt die Positionierung des Bearbeitungsaggregats vor Beginn der Vereinzelung und Ausführen der Trennschnitte.
Figur 3A zeigt die Ausführung eines ersten Trennschnitts zum Absondern eines Plattenteils.
Figur 3B zeigt die Ausführung eines zweiten Trennschnitts zum Absondern des Plattenteils.

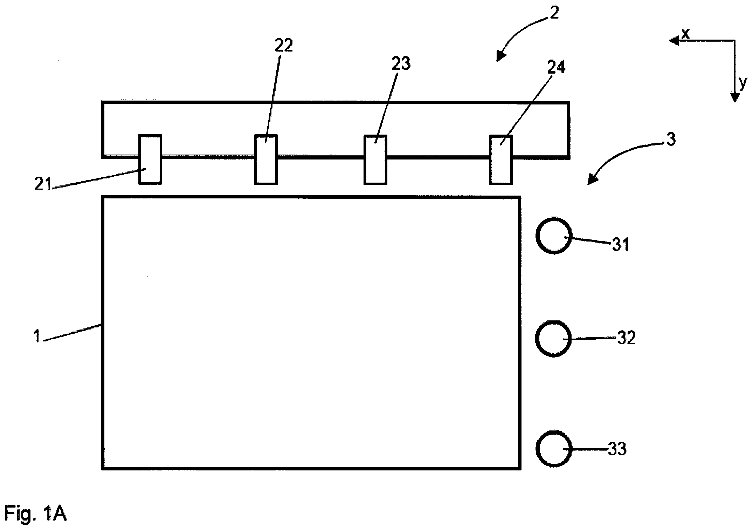

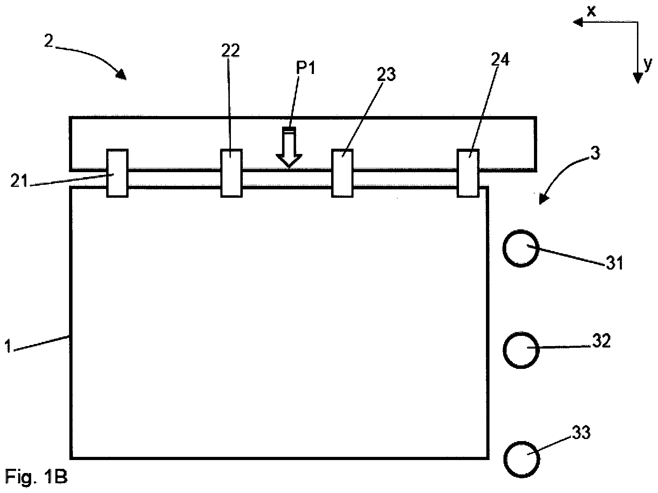

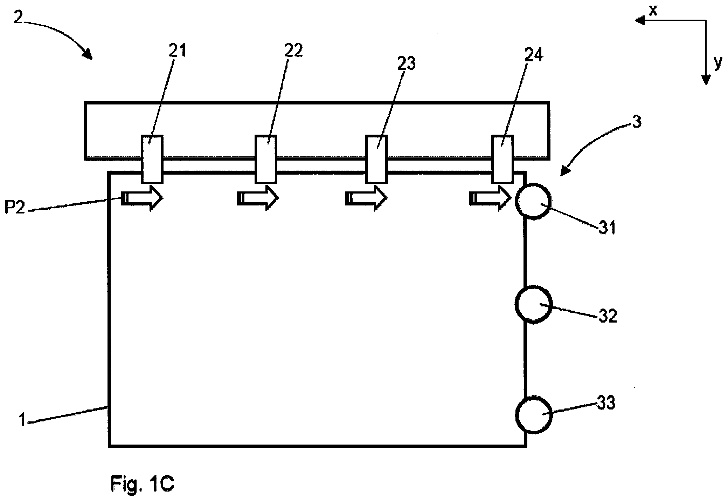

Die Großformatplatte 1 wird, wie in Figur 1 gezeigt, den Greifeinrichtungen 2 und 3 zugeführt, welche im gezeigten Beispiel an einander angrenzenden Rändern der Platte 1 "über Eck" an die Platte 1 angreifen. Die Greifeinrichtungen 2, 3 verfügen jeweils über eine Mehrzahl Greifelemente 21 bis 24 bzw. 31 bis 33, mit denen sie die Platte 1 greifen können. Die Greifeinrichtungen 2, 3 sind so konzipiert, dass sie in die Richtungen X und Y senkrecht dazu beweglich sind, entweder als Kollektiv oder die einzelnen Greifelemente 21 bis 24, 31 bis 33 separat. Durch Verschieben in Richtung Y (Pfeil P1) wird die erste Greifeinrichtung 2 in die Eingriffsposition mit der Platte 1 gefahren, Figur 1B. Anschließend wird die Platte 1 durch Bewegen der Greifeinrichtung 2 in Richtung X (Pfeil P2) an die zweite Greifeinrichtung 3 heran bewegt und von dieser ergriffen, Figur 1C.

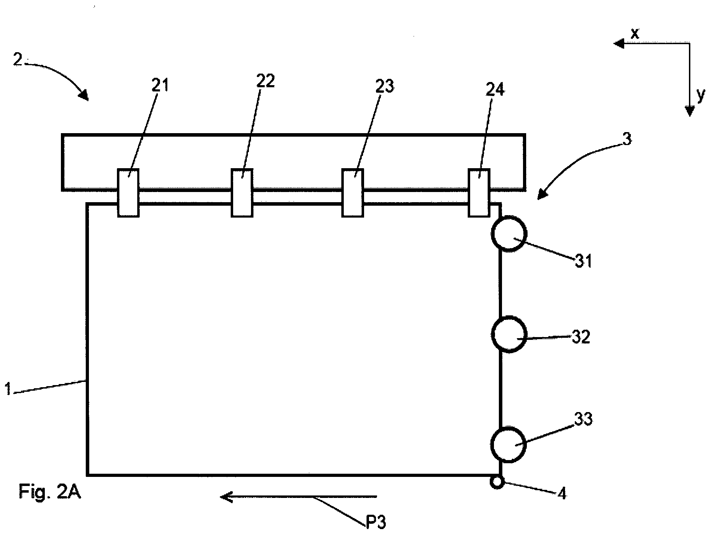

In dieser Ausrichtung erfolgt nun die Bearbeitung des Plattenumrisses. Dazu wird ein Bearbeitungsaggregat 4 (z.B. ein Fräsaggregat) im Bereich der Plattenschmalseite positioniert. Nun erfolgt eine Relativbewegung der Platte 1 und des Bearbeitungsaggregats 4, die dazu führt, dass das Bearbeitungsaggregat die Platte 1 umläuft. Zunächst entlang der ersten Schmalseite in Richtung des Pfeils P3, Figur 2A.

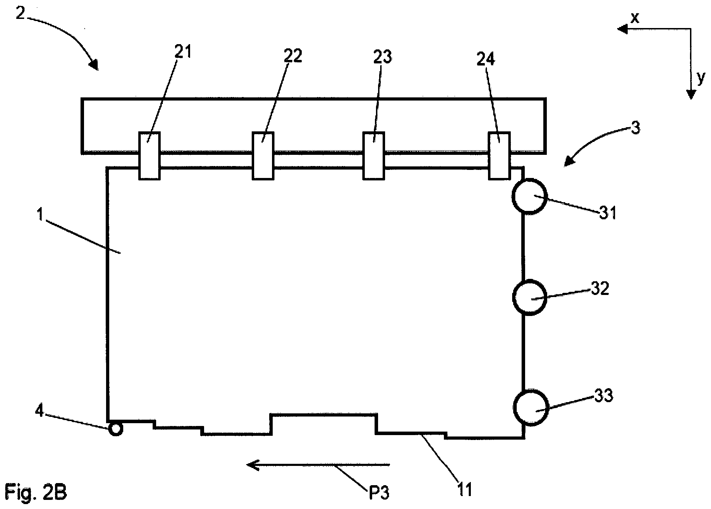

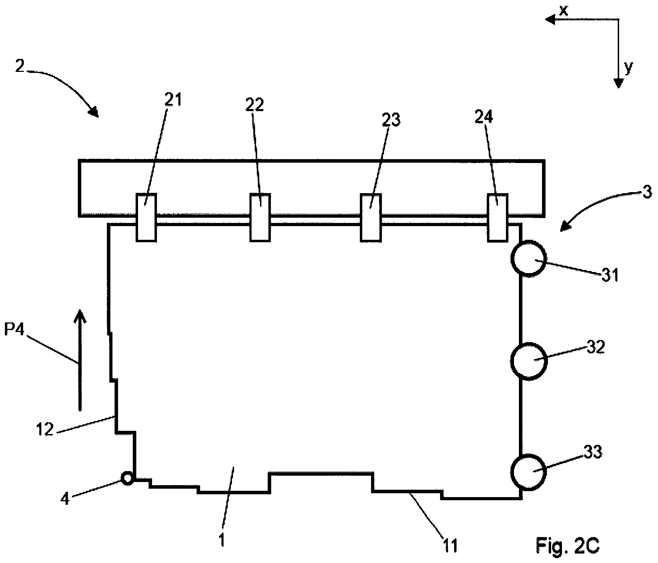

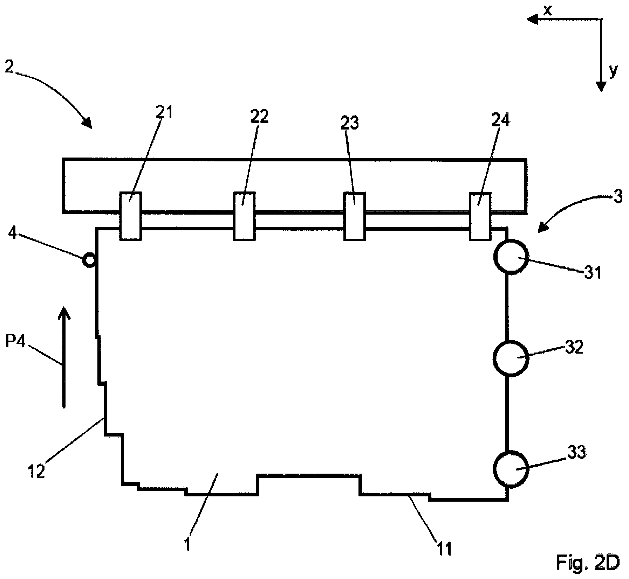

Dabei werden nach einem vorgegebenen Schnittplan Verschnittteile von der Platte 1 durch das Bearbeitungsaggregat entfernt und die Platte so konturiert. Es erfolgen dabei Rückschnitte 11, die das Bearbeitungsaggregat ausführt, indem eine Relativbewegung von Platte 1 und Aggregat 4 erfolgt, Figur 2B. Ist eine Schmalseite bearbeitet, wird die Bearbeitung an der nächsten Schmalseite fortgesetzt, das Aggregat bewegt sich nun in Richtung des Pfeils P4 weiter um die Platte 1 und führt dabei auch entlang der zweiten an die erste angrenzenden Schmalseite Rückschnitte 12 aus, Figur 2C, Figur 2D.

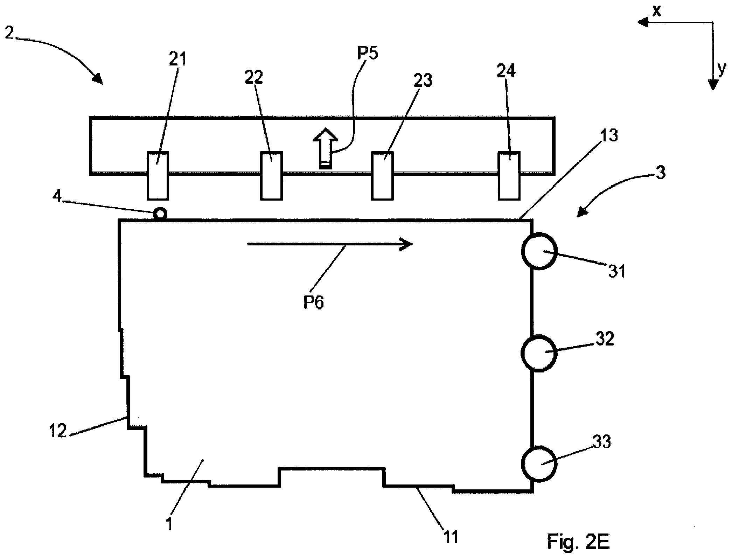

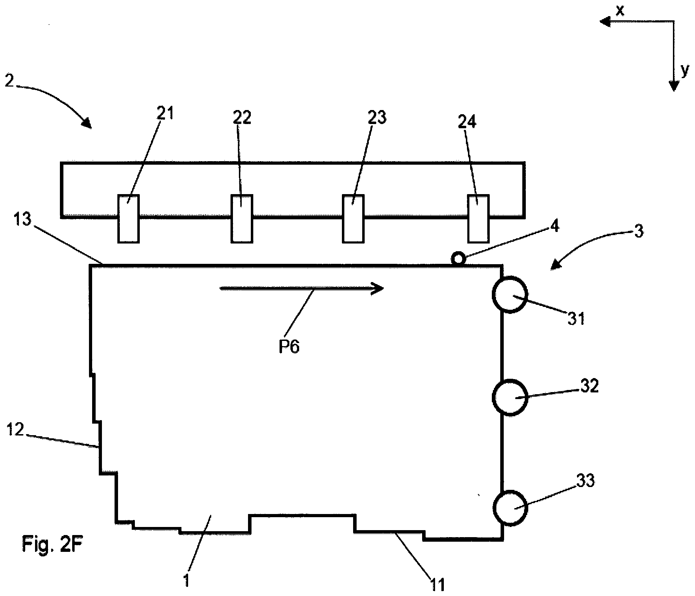

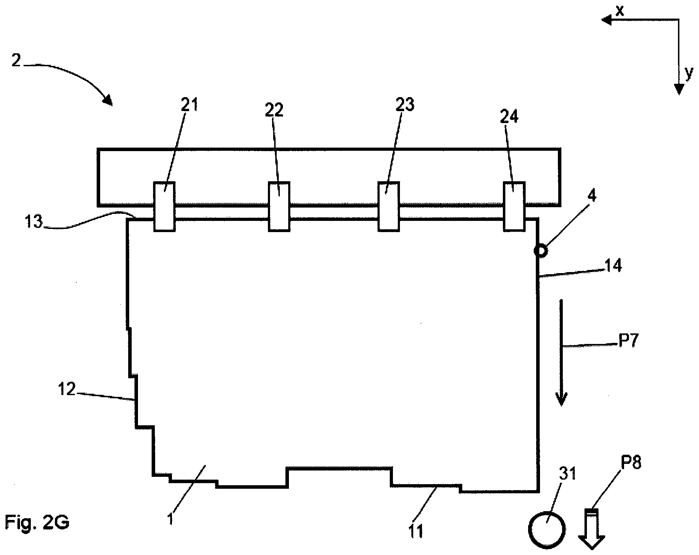

Nun ist das Bearbeitungsaggregat 4 im Bereich der Schmalseite 13 angelangt, an der die erste Greifeinrichtung 2 angreift. Damit das Aggregat 4 die Platte 1 umlaufen kann, wird diese ggf. auch nur im Bereich einzelner Greifelemente 21 bis 24 aus dem Eingriff mit der Platte 1 gelöst und in Richtung des Pfeils P5 gezogen, während das Aggregat seinen Weg in Richtung des Pfeils P6 in Richtung X fortsetzt und ggf. noch eine Bearbeitung der Schmalseite dabei durchführt, Figur 2E, Figur 2F. Ist das Aggregat 4 aus der Eingriffszone der ersten Greifeinrichtung 2 bzw. eines der Greifelemente 21 bis 24 heraus, so kann die erste Greifeinrichtung 2 wieder an den Rand der Platte 1 angreifen und diese halten, Figur 2G.

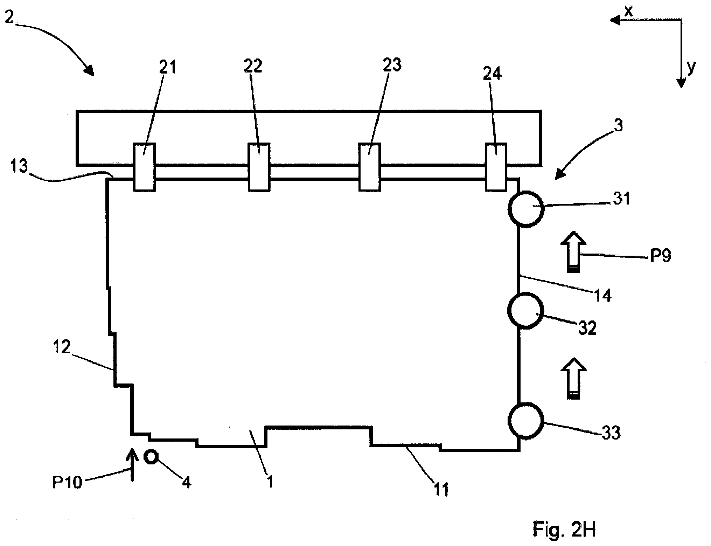

Nun setzt das Bearbeitungsaggregat seinen Weg in Richtung des Pfeils P7 entlang der letzten Schmalseite 14 fort, Figur 2G, und führt dort ggf. Bearbeitungsschritte wie Rückschnitte oder dergleichen durch. Die zweite Greifeinrichtung 3 wird dabei aus dem Eingriff mit der Platte gelöst und im gezeigten Beispiel in Richtung Y (Pfeil P8) aus der Eingriffszone bewegt. Sie kann aber auch so ausgebildet sein, dass sie in Richtung X beweglich ist. Ist das Aggregat 4 die gesamte Schmalseite 14 abgelaufen, wird die zweite Greifeinrichtung 3 durch Verschieben der Greifelemente 31 bis 33 in Richtung des Pfeils P9 wieder in Eingriff mit der Platte gebracht und die Vereinzelung kann beginnen. Dazu wird das Aggregat 4 zum Durchführen von Trennschnitten in die in Figur 2H gezeigte Position in die Ecke der Platte 1 gefahren, die der Ecke diagonal gegenüberliegt, an welcher sich die beiden durch die Greifeinrichtungen 2, 3 gehaltenen Schmalseiten 13, 14 der Platte 1 treffen.

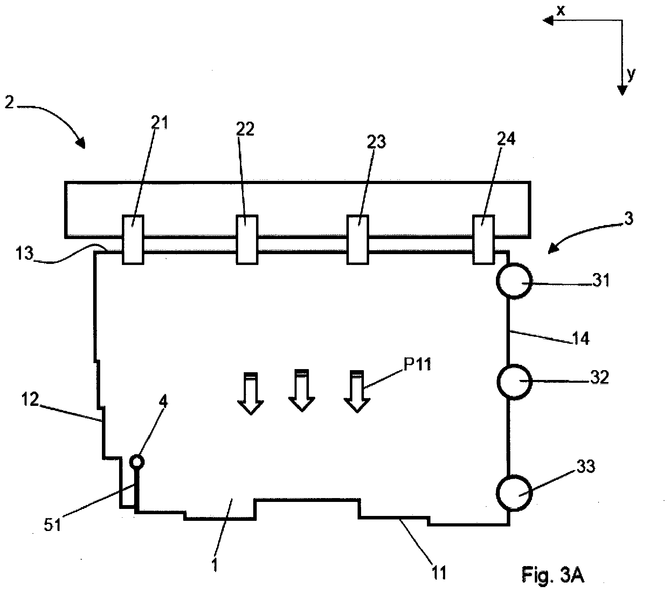

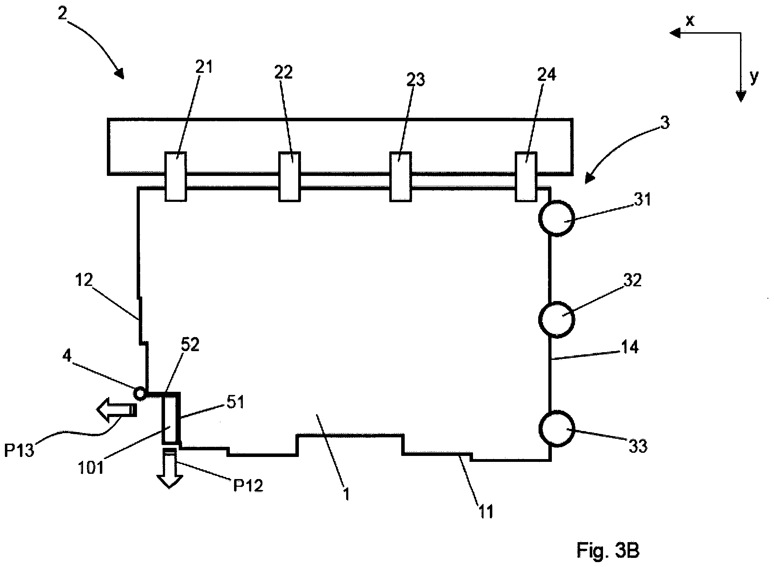

Zunächst führt das Aggregat 4 einen Trennschnitt in Richtung Y (Pfeil P10) aus, so dass ein Schnitt 51 entsteht, Figur 3A. dies geschieht bevorzugt unter Festhalten des Aggregats und Vorschubs der Platte 1 in Richtung des Pfeils 11.

Ist der Schnitt 51 ausgeführt, wird das Aggregat 4 relativ zur Platte 1 in Richtung X bewegt und führt einen zweiten Trennschnitt 52 senkrecht zum und angrenzend an den ersten Trennschnitt 51 aus, Pfeilrichtung P13. Durch diesen L-förmigen Trennschnitt wird ein Teil 101 der Großformatplatte 1 abgetrennt bzw. vereinzelt und kann entnommen werden (Pfeil P12).

Dieser Trennvorgang mit den L-förmigen Trennschnitten wiederholt sich so lange, bis die Platte 1 vollständig nach Zuschnittplan vereinzelt ist. Bevorzugt wird die Platte 1 von der Ausgangsecke diagonal in Richtung der Ecke der sich treffenden Schmalseiten 13, 14 abgearbeitet. Gegebenenfalls können sich auf Schnittlinien des Zuschnittplans befindliche Greifelemente 21 bis 24, 31 bis 33 aufgrund ihrer Einzelbeweglichkeit umgesetzt werden, so dass ein barrierefreies Zuschneiden mit ausreichendem Halten der Platte 1 möglich ist und prinzipiell kein oder kaum weiterer Verschnitt entsteht.

## Patentansprüche

1. Verfahren zum Bearbeiten einer großformatigen Platte (1) aus Holz oder Holzaustauschstoffen, aufweisend die folgenden Schritte:
a. Bereitstellen einer großformatigen Platte (1);
b. Einspannen der Platte (1) mittels in einer ersten Richtung (X)
verfahrbaren ersten Greifeinrichtung (2, 21, 22, 23, 24), durch Angreifen dieser im Bereich eines ersten Randes der Platte (1);
c. Entfernen von Verschnittteilen entlang des Umfangs der Platte (1) durch Durchführen von Rückschnitten entlang des Umfangs der Platte (1) mittels eines Bearbeitungsaggregats (4) entsprechend einem vorgegebenen Zuschnittplan,
**dadurch gekennzeichnet,**
**dass** die erste Greifeinrichtung in einer zweiten Richtung (Y) verfahrbar ist und
**dass** die Platte (1) in Schritt b. zusätzlich mittels in der ersten Richtung (X) und auch in der zweiten Richtung (Y) verfahrbaren, zweiten Greifeinrichtung (3, 31, 32, 33) im Bereich eines vom ersten Rand der Platte (1) verschiedenen zweiten Randes der Platte (1) eingespannt wird.

2. Verfahren nach Anspruch 1,
**dadurch gekennzeichnet,**
**dass** nach dem Schritt c. ein Vereinzeln der mit Rückschnitten versehenen großformatigen Platte (1) durch sukzessives Abtrennen jeweils eines Vereinzelungsteils, insbesondere durch Ausführen rechtwinkliger Trennschnitte (51, 52), erfolgt.

3. Verfahren nach Anspruch 1 oder 2,
**dadurch gekennzeichnet,**
**dass** die wenigstens eine Greifeinrichtung (2, 3) eine Mehrzahl Greifelemente (21, 22, 23, 24; 31, 32, 33) aufweist, welche aufeinander zu und voneinander weg verschieblich und einzeln ansteuerbar ausgebildet sind.

4. Verfahren nach einem der Ansprüche 1 bis 3,
**dadurch gekennzeichnet,**
**dass** die Platte (1) bei der Durchführung der Trennschnitte (51, 52) oder Rückschnitte in einer ersten und/oder einer zweiten Vorschubrichtung (X, Y) durch Verschieben der Greifeinrichtungen (2, 3) relativ zum Bearbeitungsaggregat (4) verschoben wird.

5. Verfahren nach einem der vorigen Ansprüche,
**dadurch gekennzeichnet,**
**dass** während der Durchführung des Schrittes c. das Bearbeitungsaggregat (4) und die Platte (1) relativ zueinander so bewegt werden, dass das Bearbeitungsaggregat (4) die Platte (1), insbesondere vollständig, umläuft.

6. Verfahren nach einem der vorigen Ansprüche,
**dadurch gekennzeichnet,**
**dass** wenigstens eines der Greifelemente (21, 22, 23, 24; 31, 32, 33) während der Durchführung der Rückschnitte oder Trennschnitte aus dem Eingriff mit der Platte (1) gelöst und/oder in Eingriff mit der Platte (1) gebracht werden.

7. Verfahren nach einem der vorliegenden Ansprüche,
**dadurch gekennzeichnet,**
**dass** vor der Vereinzelung der Platte (1) die nach Zuschnittplan vorgegebene Außenkontur der Platte (1) vollständig durch Durchführen von Rückschnitten fertig gestellt wird.

8. Verfahren nach einem der vorigen Ansprüche,
**dadurch gekennzeichnet,**
**dass** zusätzlich zu dem Durchführen von Rückschnitten weitere Bearbeitungen, insbesondere Bohrbearbeitungen, entlang des Umfangs der Platte (1) oder/und deren Ober- oder Unterseite durchgeführt werden.

## Claims

1. Method for machining a large panel (1) of wood or wood substitutes, comprising the following steps:
a. preparing a large panel (1);
b. clamping the panel (1) by means of a first gripping device (2, 21, 22, 23, 24) which is movable in a first direction (X), by gripping an area of a first edge of the panel (1);
c. removing cut parts along the periphery of the panel (1) by carrying out cutbacks along the periphery of the panel (1) by means of a machining assembly (4) corresponding to a predetermined cutting plan, **characterised in that** the first gripping device is movable in a second direction (Y) and that the panel (1) is clamped in step b. additionally in the region of a second edge of the panel (1), which is different from the first edge of the panel (1), by means of a second gripping device (3, 31, 32, 33) which is movable in the first direction (X) and also in the second direction (Y).

2. Method according to claim 1 **characterised in that** after step c. a large panel (1) provided with cutbacks is individually singled out by successively separating off each one singulated part, more particularly by making right-angled separating cuts (51, 52).

3. Method according to claim 1 or 2 **characterised in that** the at least one gripping device (2, 3) has a plurality of gripping elements (21, 22, 23, 24; 31, 32, 33) which are individually controllable and configured to move up to one another and away from one another.

4. Method according to one of claims 1 to 3 **characterised in that** when carrying out the separating cuts (51, 52) or cutbacks the panel (1) is moved in a first and/or second feed direction (X, Y) by sliding the gripping devices (2, 3) relative to the machining assembly (4).

5. Method according to one of the preceding claims **characterised in that** whilst carrying out step c. the machining assembly (4) and the panel (1) are moved relative to one another so that the machining assembly (4) revolves round the panel (1), more particularly completely.

6. Method according to one of the preceding claims **characterised in that** when carrying out the cutbacks or separating cuts at least one of the gripping elements (21, 22, 23, 24; 31, 32, 33) is moved out of engagement with the panel (1) and/or is brought into engagement with the panel (1).

7. Method according to one of the present claims **characterised in that** prior to separating the panel (1) the outer contour of the panel (1) predetermined by the cutting plan is finished completely by carrying out the cutbacks.

8. Method according to one of the preceding claims **characterised in that** in addition to carrying out the cutbacks further machining work, more particularly drilling work, is carried out along the periphery of the panel (1) and/or the upper or underneath side thereof.

## Revendications

1. Procédé d'usinage d'une plaque (1) de grand format en bois ou en matériaux de remplacement du bois, qui comprend les étapes suivantes:
a. mise à disposition d'une plaque (1) de grand format;
b. serrage de la plaque (1) au moyen d'un premier dispositif de préhension (2, 21, 22, 23, 24), déplaçable dans une première direction (X), lequel saisit la plaque (1) dans la région d'un premier bord,
c. élimination de déchets de coupe le long du pourtour de la plaque (1) par exécution de contre-découpes le long du pourtour de la plaque (1), au moyen d'un groupe d'usinage (4), conformément à un plan de coupe prédéterminé,
**caractérisé en ce que**
le premier dispositif de préhension peut être déplacé dans une deuxième direction (Y) et
que la plaque (1), lors de l'étape b., peut être supplémentairement serrée dans la région d'un deuxième bord de la plaque (1), différent du premier bord de la plaque, (1), au moyen d'un deuxième dispositif de préhension (3, 31, 32, 33) déplaçable dans la première direction (X) ainsi que dans la deuxième direction (Y).

2. Procédé selon la revendication 1,
**caractérisé en ce que**,
après l'étape c., une division de la plaque (1) de grand format, pourvue de contre-découpes, est effectuée par séparations successives de pièces individuelles, en particulier par exécution de coupes de séparation à angle droit (51, 52).

3. Procédé selon revendication 1 ou 2,
**caractérisé en ce que**
l'au moins un dispositif de préhension (2, 3) présente une pluralité d'éléments de préhension (21, 22, 23, 24; 31, 32, 33) qui peuvent être déplacés les uns vers les autres et éloignés les uns des autres et peuvent être commandés individuellement.

4. Procédé selon l'une des revendications 1 à 3,
**caractérisé en ce que**
la plaque (1), lors de l'exécution des coupes de séparation (51, 52) ou des contre-découpes, peut être déplacée dans une première et / ou dans une deuxième direction d'avance (X, Y) par déplacement des dispositifs de préhension (2, 3) par rapport au groupe d'usinage (4).

5. Procédé selon l'une des revendications précédentes,
**caractérisé en ce que**,
pendant l'exécution de l'étape c., le groupe d'usinage (4) et la plaque (1) sont déplacés l'un par rapport à l'autre de manière à ce que le groupe d'usinage (4) passe autour de la plaque (1), la contourne en particulier complètement.

6. Procédé selon l'une des revendications précédentes,
**caractérisé en ce que**
l'un des éléments de préhension (21, 22, 23, 24; 31, 32, 33) au moins est mis hors de prise avec la plaque (1) et/ou mis en prise avec la plaque (1) pendant l'exécution des contre-découpes ou des coupes de séparation.

7. Procédé selon l'une des revendications précédentes,
**caractérisé en ce que**,
avant la séparation de la plaque (1), le contour extérieur de la plaque (1), prédéterminé par le plan de coupe, est complètement réalisé par exécution de contre-découpes.

8. Procédé selon l'une des revendications précédentes,
**caractérisé en ce que**,
en plus de l'exécution de contre-découpes, d'autres opérations d'usinage, en particulier l'exécution de perçages le long du pourtour de la plaque (1) et / ou de sa face supérieure ou de sa face inférieure, sont exécutées.
